**Europäisches Patentamt**

**European Patent Office**

**Office européen des brevets**

(19)

(11) Publication number: **0 450 583 A1**

## EUROPEAN PATENT APPLICATION

(12)

(21) Application number: **91105227.2**

(22) Date of filing: **03.04.91**

(51) Int. Cl.5: **B62M 3/04**

(30) Priority: **04.04.90 JP 36429/90**

(43) Date of publication of application:
**09.10.91 Bulletin 91/41**

(84) Designated Contracting States:
**AT BE CH DE DK ES FR GB GR IT LI LU NL SE**

(71) Applicant: **Maruyama, Shigeyuki**
**2209-9, Oaza-Toyoshina, Toyoshina-machi**
**Minamiazumi-gun, Nago-ken(JP)**

(72) Inventor: **Maruyama, Shigeyuki**
**2209-9, Oaza-Toyoshina, Toyoshina-machi**
**Minamiazumi-gun, Nago-ken(JP)**

(74) Representative: **Klunker . Schmitt-Nilson .**
**Hirsch**
**Winzererstrasse 106**
**W-8000 München 40(DE)**

(54) **A bicycle pedal-arm arrangement.**

(57) A pedal-arm arrangement has left and right side pedal-arm arrangements. Each arrangement comprises a pedal (2) connected via first (3) and second arm (5) members to a second shaft member (4) or torque input shaft (7) of the bicycle. The first arm member (3) is maintained so as not to change its attitude by means of a transmission mechanism constituted by first (9) and second (11) sprocket wheels and a chain (8) engaged therewith. Accordingly, where the pedal (2) is positioned forward of the second shaft member (4), the overall length of the pedal arm is larger than the length of the second arm member (5). The radius of the locus along which the pedal (2) travels is maintained the same as that where the pedal (2) is mounted on the frontside end of the second arm member (5) as in the conventional bicycle.

FIG. 3

Field of the Invention

The present invention relates to a pedal-arm arrangement of a bicycle. More specifically, the present invention pertains to a pedal-arm arrangement of a bicycle which is capable of exerting high torque without increasing the turning radius of the pedals.

prior Art Description

A bicycle has a pair of crank-shaped pedal-arms which are provided at their distal ends with pedals and are fixed at their proximal ends to a torque input shaft. The torque input shaft is connected to a rear wheel through a chain transmission mechanism. When the bicycle is pedaled, a torque is applied to the input shaft. As the magnitude of the torque is a function of the product of the tread force and the length of the pedal-arm, so that for obtaining a larger torque without increasing the tread force, it is necessary to lengthen the pedal-arms.

If longer pedal-arms are provided, the pedals at the distal ends of the respective pedal-arms travel along a larger turning locus, making it impopssible for some people to reach the pedals when they are positioned at their lowest level. The use of longer pedal-arms for the above purpose is thus not practical.

SUMMARY OF THE INVENTION

Accordingly, the main object of the present invention is to provide a novel bicycle pedal-arm arrangement, which is capable of exerting a large torque without increasing the tread force or the arm-length of pedal-arms.

The pedal-arm arrangement according to the present invention comprises left and right side pedal-arm arrangements of the same structure. Each of the pedal-arm arrangements comprises a first arm member and a pedal rotatably mounted on the distal end of the first arm member. The first arm member is fixed at its proximal end to a first shaft member extending perpendicularly thereto. The first arm member also has a first sprocket wheel fixedly mounted therearound. The pedal-arm arrangement also has a second shaft member serving as a torque input element for a rear wheel of the bicycle and a second arm member which is fixedly connected at its one end to the second shaft member. The other end of the second arm member is rotatably mounted on the first shaft member. A second sprocket wheel is rotatably mounted around the second shaft member and is fixedly connected to a structural member of the bicycle. The second sprocket wheel has the same number of teeth as that of the first sprocket wheel. The first and second sproket wheels are connected via a power transmission member such as a chain or the like.

According to this arrangement, the pedals are mounted on the distal ends of the first arm members which maintain their attitude owing to the action of the chain transmission mechanism. Therefore, the arm length of the respective pedal-arm arrangements is set to be larger than the length of the second arm member when the pedals are positioned forward of the input shaft of the bicycle, although the pedals travel along turning loci having a radius equal to the length of the second arm member. Hence, larger torque can be obtained without deteriorating the ridability of the bicycle.

BRIEF DESCRIPTION OF THE DRAWINGS

Figure 1 is a left-side view of a pedal-arm arrangement of an embodiment according to the present invention;
Figure 2 is a left-side sectional view of the pedal-arm arrangement taken along line II-II shown in Figure 1; and,
Figure 3 illustrates the movement of the left-side portion of the pedal-arm arrangement of Figure 1.

DETAILED DESCRIPTION OF THE PREFERRED EMBODIMENT

While the present invention will be described in connection with a preferred embodiment, it will be understood that this does not limit the invention to the embodiment. On the contrary, it is intended to cover all alternatives, modifications, and equivalents as may be included within the spirit and scope of the invention as defined by the attached claims.

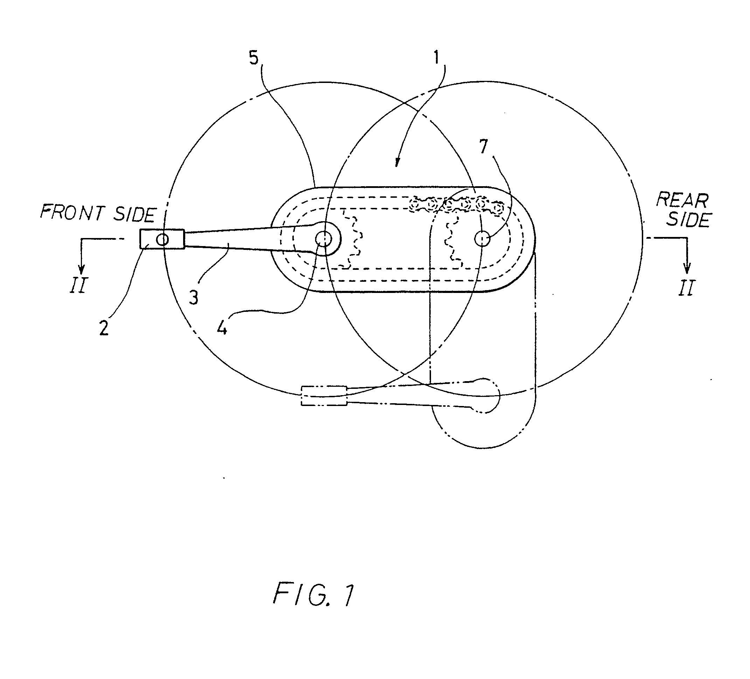

A preferred embodiment of the present invention will now be described with reference to Figures 1 to 3.

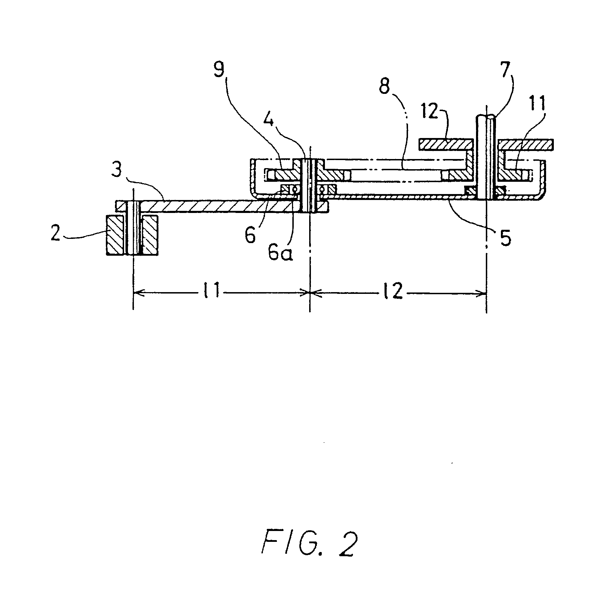

Figures 1 and 2 illustrate the left-side portion of a pedal-arm arrangement according to the present invention. Since the overall structure of a bicycle is well known, portions except for the pedal-arm arrangement are not illustrated in the drawings. The pedal-arm arrangement comprises left and right side portions of the same structure, so that, in the following, the explanation will be made only to the left-side portion of the pedal-arm arrangement.

The left-side pedal-arm arrangement 1 comprises a first arm member 3 which is provided at its distal end with a left pedal 2 rotatable with respect thereto. The proximal end of the first arm member 3 is fixed to a first shaft member 4 extending perpendicularly thereto. The first shaft member 4 penetrates loosely through a cover member 5 of an elongated circular shape and extends to the inner side of the cover member 5. The cover member 5 functions as a second arm member. A ball bearing mechanism 6a is fixed to a boss 6 formed on the inside surface of the cover member 5, by which the first shaft member 4 is rotatably supported on the cover member 5. The cover member 5 is fixedly mounted at its rear side end portion on a laterally outside end cf a second shaft member 7. The second shaft member 7 is disposed parallel to the first shaft member 3. The second shaft member 7 is the torque input shaft of the bicycle.

The first and second shaft members 4 and 7 are connected with each other by a chain 8 as well as by the cover member 5 (second arm member). More specifically, a first sprocket wheel 9 is fixedly mounted on the first shaft member 4, whereas a second sprocket wheel 11 is rotatably mounted on the second shaft member 7 and is fixedly mounted on a structural member of the bicycle. The chain 8 passes around the first and second sprocket wheels 9 and 11. The first and second sprocket wheels 9 and 11 have the same number of teeth. In the present embodiment, the first arm member 3 and the cover member 5 (second arm member) are arranged such that they are aligned horizontally when the first arm member 3 is positioned extending horizontally in the front side direction of the bicycle, as shown in Figure 1. In addition, the distance $\ell 1$ from the first shaft member 4 to the pedal 2 is set to be equal to the distance $\ell 2$ from the first shaft member 4 to the second shaft member 7.

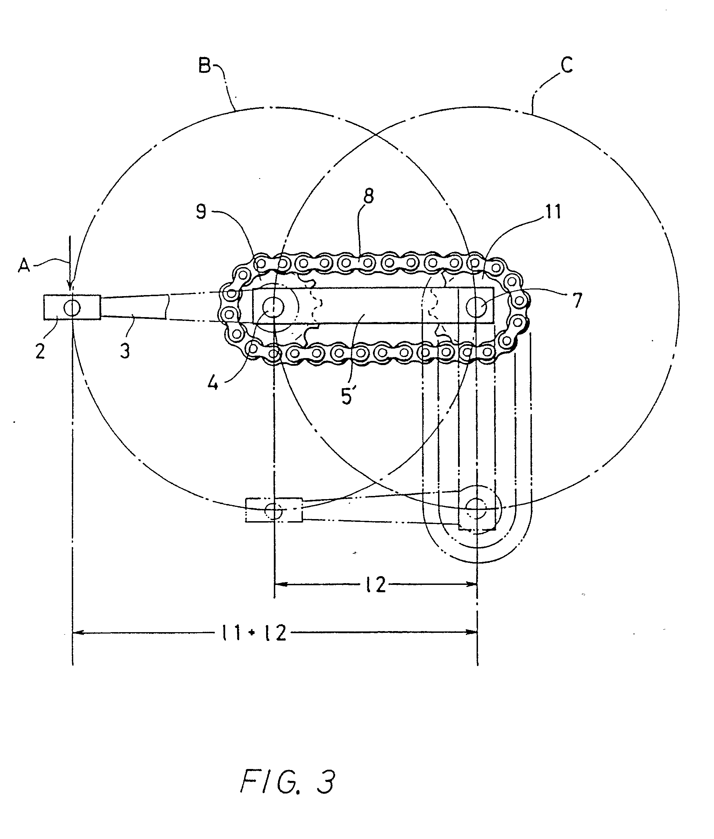

The movement of the left-side pedal-arm arrangement 1 will be described referring mainly to Figure 3. In Figure 3, the cover member or second arm member 5 is shown as replaced by a plate meber 5' for easy understanding of the movement. When pressed downward along arrow A in Figure 3, the pedal 2 positioned extending horizontally in the forward direction turns around the first shaft member 4 along a turning locus B. At the same time, the first shaft 4 turns around the second shaft member 7 along a turning locus C having a radius, $\ell 2$ because the first shaft member 4 is connected through the second arm member 5' to the second shaft member 7. On the other hand, the first arm member 3 fixed to the first shaft member 4 maintains its attitude horizontally as shown by the phantom line in Figure 3 owing to the action of the transmission mechanism consisting of the first and second sprockets 9, 11 and chain 8. That is, the first arm member 3 as a whole turns with the second arm member 5' in such manner that it maintains its horizontal attitude.

According to the present embodiment, where the pedal 2 is positioned for receiving tread force, in other words, where the pedal is positioned forward of the input shaft, the pedal-arm length is set to be larger than $\ell 2$. The maximum length, ( $\ell 1 + \ell 2$) is obtained when the first arm member 3 is aligned with the second arm member 5' as shown by the solid line in Figure 3. The radius of the locus along which the pedal 2 travels is $\ell 2$ and is the same length as that should the pedal be mounted on the end of the second arm member 5' as in the conventional bicycle. Therefore, according to the present embodiment, the pedal-arm length can be enlarged where tread forces are applied on the pedal 2 without introducing the defect that the rider becomes unable to reach the pedal with his toes.

## Claims

1. A pedal-arm arrangement of a bicycle having left and right side pedal-arm arrangements, each of said pedal-arm arrangements comprising a first arm member (3) supporting a pedal (2) rotatably on the distal end thereof, a first shaft member (4) fixed to the proximal end of said first arm member and extending perpendicularly thereto, a first sprocket wheel (9) fixedly mounted on said first shaft, a second shaft member for input of torque to a drive wheel of the bicycle, a second arm member (5) which is fixed at its rear-side end to said second shaft member and is mounted rotatably at its front-side end on said first shaft member, a second sprocket wheel (11) which is mounted rotatably on said second shaft member and is fixed to the body of the bicycle, and a power transmission member (8) arranged between said first and second sprocket wheels, said first and second sprocket wheels having the same number of teeth.

2. A pedal-arm arrangement according to claim 1, wherein said second arm member is in the form of a cover member which encloses said first and second shaft members, said first and second sprocket wheels, and said power transmission member.

FRONT SIDE

REAR SIDE

FIG. 1

FIG. 2

FIG. 3

## EUROPEAN SEARCH REPORT

**EP 91 10 5227**

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 002 832 (A. HUOT) <br> * the whole document * <br> _ _ _ | 1,2 | B 62 M 3/04 |
| X | GB-A-2 152 172 (WU CHING-JONG) <br> * abstract; figures * <br> _ _ _ | 1,2 | |
| P,X | EP-A-0 386 847 (O. NISHIYAMA) <br> * page 4, line 12 - page 4, line 27; figures 5, 6 * <br> _ _ _ _ _ | 1,2 | |
| | | | TECHNICAL FIELDS SEARCHED (Int. Cl.5) |
| | | | B 62 M |
| | The present search report has been drawn up for all claims | | |

| Place of search | Date of completion of search | Examiner |
|---|---|---|
| The Hague | 03 July 91 | FRANKS B.G. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document